# EUROPÄISCHE PATENTSCHRIFT

(11) **EP 2 244 945 B1**
(45) Veröffentlichungstag und Bekanntmachung des Hinweises auf die Patenterteilung: **03.08.2011**
(21) Anmeldenummer: 09709099.7
(22) Anmeldetag: 02.02.2009
(51) Int. Cl.: B64D 37/16, B64F 1/28

(54) **LUFTFAHRZEUGTANKSYSTEM, BETANKUNGSANLAGE UND VERFAHREN ZUM BETANKEN EINES LUFTFAHRZEUGS**
AIRCRAFT TANK SYSTEM, REFUELLING UNIT AND METHOD FOR REFUELLING AN AIRCRAFT,
SYSTÈME DE RÉSERVOIR D'AÉRONEF, INSTALLATION DE RAVITAILLEMENT EN CARBURANT ET PROCÉDÉ POUR RAVITAILLER UN AÉRONEF EN CARBURANT

(30) Priorität: 07.02.2008 DE 102008007932; 07.02.2008 US 26863
(43) Veröffentlichungstag der Anmeldung: 03.11.2010
(73) Patentinhaber: Airbus Operations GmbH, 21129 Hamburg (DE)
(72) Erfinder: GLASER, Daniel, 63776 Mömbris (DE); KRUSE, Tim, 20146 Hamburg (DE); LANTERMANN, Heiko, 81477 München (DE); PAHNER, Sebastian, 19258 Boizenburg/Elbe (DE); THEIS, Peter, 22587 Hamburg (DE); THOMASCHEWSKI, Oliver, 22339 Hamburg (DE)
(74) Vertreter: Schicker, Silvia
(86) Internationale Anmeldenummer: PCT/EP2009/000667
(87) Internationale Veröffentlichungsnummer: WO 2009/098012

(56) Entgegenhaltungen:
- WO-A-00/66482
- WO-A-2007/138366
- GB-A- 468 460
- US-A- 2 406 120
- US-A- 2 965 196
- US-A- 5 575 441

## Beschreibung

Die Erfindung betrifft ein Luftfahrzeugtanksystem, insbesondere ein Flugzeugtanksystem Ferner betrifft die Erfindung ein Verfahren zum Betanken eines Luftfahrzeugs.

Ein Tanksystem eines Verkehrsflugzeugs verfügt über mehrere Tankzellen, die üblicherweise in den Flügeln sowie im Flügelmittelkasten des Flugzeugs angeordnet sind. Die Befüllung des Tanksystems mit Treibstoff kann zentral durch Druckbetankung über einen im Bereich eines Flügels angeordneten Tankstutzen erfolgen. Alternativ dazu ist auch eine Betankung über mehrere dezentrale Tankstutzen möglich. Während des Betankungsvorgangs aus dem Tanksystem verdrängte Luft wird über Entlüftungsleitungen zu im Bereich der Flügelenden vorgesehenen Entlüftungsstutzen geleitet und von dort in die Umgebung abgeführt. Die aus dem Tanksystem entweichende Luft enthält Treibstoffdampf, wobei die während des Betankungsvorgangs verdampfende Treibstoffmenge von der aktuellen Treibstoffsättigung der Luft, der Temperatur, dem Druck und der Art des Treibstoffs abhängt.

Bei der Betankung eines Flugzeugs mit herkömmlichem Kerosin verdampfen bei einer Umgebungstemperatur von 20°C 11,9 ml/m³, im Wesentlichen in Form von Pentadecan. Dies bedeutet, dass z.B. am Frankfurter Flughafen, wo an Spitzentagen 18 Millionen Liter Kerosin zur Flugzeugbetankung verbraucht werden, 214,1l Kerosin pro Tag in die Umgebung entweichen. Die Verdampfung von Treibstoff bei der Flugzeugbetankung führt zu einem nicht unerheblichen Treibstoffverlust, der bei höheren Umgebungstemperaturen und/oder bei der Verwendung von leichter flüchtigen Alternativtreibstoffen die oben genannten Werte auch deutlich überschreiten kann. Beispielsweise wäre bei der Verwendung von Ethanoltreibstoff anstelle von Kerosin am Frankfurter Flughafen mit einer Treibstoffdampfemission von 790 t pro Jahr zu rechnen. Neben dem wirtschaftlichen Verlust birgt die Emission von Treibstoffdampf sicherheitstechnische Risiken und wirkt sich überdies negativ auf die Umwelt aus. Es gibt daher bereits seit längerer Zeit Bestrebungen, die Emission von Treibstoffdampf bei der Flugzeugbetankung zu verhindern oder zumindest zu minimieren.

Die US 2,965,196 und die US 5,782,258 beschreiben jeweils eine mit einem Entlüftungsstutzen eines Tanks verbindbare Adsorptionsvorrichtung. Die Adsorptionsvorrichtung enthält ein Adsorptionsmaterial, wie z.B. feinkörnige Aktivkohle, zur Adsorption von Kohlenwasserstoffen, die während des Betankungsvorgangs aus dem Tank austreten. Diese bekannten Systeme haben den Nachteil, dass der an dem Adsorptionsmaterial angelagerte Treibstoff entweder gar nicht oder nur mit verhältnismäßig großem apparativen Aufwand rückgewonnen werden kann. Die aus dem Stand der Technik bekannten Systeme sind daher für einen Einsatz an Bord eines Flugzeugs nicht geeignet. Die US 5,575,441 of fenbart ein Luftfahrzeugtanksystem und ein Verfahren zum Betanken eines Luftfahrzeugs gemäß dem Oberbegriff des Anspruchs 1 bzw. 6. Der Erfindung liegt die Aufgabe zugrunde, ein Luftfahrzeugtanksystem sowie eine Betankungsanlage zur Betankung eines Luftfahrzeugtanksystems bereitzustellen, die auf einfache Art und Weise und unter Beanspruchung eines minimalen zusätzlichen Einbauraums während eines Betankungsvorgangs die Emission von Treibstoffdampf in die Umgebung verhindern und eine Rückgewinnung des verdampften Treibstoffs ermöglichen. Ferner liegt der Erfindung die Aufgabe zugrunde, ein einfach durchführbares Verfahren zum Betanken eines Luftfahrzeugs anzugeben, das die Emission von Treibstoffdampf in die Umgebung verhindert und eine Rückgewinnung des während des Betankungsvorgangs verdampften Treibstoffs ermöglicht.

Diese Aufgabe wird durch ein Luftfahrzeugtanksystem mit den im Anspruch 1 angegebenen Merkmalen und durch ein Verfahren zum Betanken eines Luftfahrzeugs mit den im Anspruch 6 angegebenen Merkmalen gelöst.

Ein erfindungsgemäßes Luftfahrzeugtanksystem umfasst mindestens eine Tankzelle zur Aufnahme von Treibstoff. Die Tankzelle ist dazu eingerichtet, mit Kerosin oder einem beliebigen anderen Treibstoff zum Antreiben des Luftfahrzeugs betankt zu werden. Es versteht sich, dass das erfindungsgemäße Luftfahrzeugtanksystem auch mehrere Tankzellen umfassen kann, die im an Bord eines Flugzeugs montierten Zustand des Tanksystems beispielsweise in den Flügeln und/oder im Flügelmittelkasten des Flugzeugs angeordnet sind. Eine Treibstoftleitung verbindet die Tankzelle mit einem Treibstoffeinlassanschluss. Über den Treibstoffeinlassanschluss und die Treibstoffleitung kann der Tankzelle Treibstoff zugeführt werden. Bei einem mehrere Tankzellen umfassenden Tanksystem ist die Treibstoffleitung vorzugsweise so gestaltet, dass sie alle Tankzellen mit einem zentralen Treibstoffeinlassanschluss verbindet. Alternativ dazu können selbstverständlich auch mehrere Treibstoftleitungen und/oder mehrere Treibstoffeinlassanschlüsse vorhanden sein. Das erfindungsgemäße Luftfahrzeugtanksystem umfasst ferner eine beispielsweise in Form einer Be- bzw. Entlüftungsleitung ausgebildete Be- bzw. Entlüftungsvorrichtung, die die Tankzelle zur Be- und Entlüftung der Tankzelle mit der Umgebung verbindet. Beispielsweise verbindet die Be- bzw. Entlüftungsvorrichtung die Tankzelle über mindestens einen NACA (National Advisory Commitee of Aeronautics)-Einlass mit der Umgebung. Der NACA-Einlass kann beispielsweise im Bereich eines Flügelendes des Flugzeugs angeordnet sein. Vorzugsweise ist das erfindungsgemäße Flugzeugtanksystem mit zwei NACA-Einlässen versehen, die jeweils an den Flügelenden der beiden Flügel des Flugzeugs angeordnet sind.

Die Be- bzw. Entlüftungsvorrichtung des erfindungsgemäßen Luftfahrzeugtanksystems umfasst ein Sperrventil, das dazu eingerichtet ist, in einer Offenstellung eine Verbindung zwischen der Tankzelle und der Umgebung freizugeben und in einer Schließstellung die Verbindung zwischen der Tankzelle und der Umgebung zu unterbrechen. Vorzugsweise ist das Sperrventil im Bereich des NACA-Einlasses angeordnet und dazu eingerichtet, in seiner Schließstellung das Ausströmen von Luft aus der Be- bzw. Entlüftungsvorrichtung über den NACA-Einlass sowie das Einströmen von Luft in die Be- bzw. Entlüftungsvorrichtung über den NACA-Einlass zu unterbinden. Wenn das erfindungsgemäße Luftfahrzeugtanksystem mehrere Be- bzw. Entlüftungsvorrichtungen und/oder mehrere NACA-Einlässe zur Verbindung der Be- bzw. Entlüftungsvorrichtung(en) mit der Umgebung umfasst, ist das Luftfahrzeugtanksystem auch mit einer entsprechenden Anzahl von Sperrventilen ausgestattet, die es ermöglichen, die Be- bzw. Entlüftungsvorrichtung(en) vollständig gegenüber der Umgebung abzusperren. Schließlich umfasst das erfindungsgemäße Luftfahrzeugtanksystem einen mit der Be- bzw. Entlüftungsvorrichtung verbundenen Abluftauslassanschluss, der beim Befüllen der Tankzelle mit Treibstoff mit einem Be- bzw. Entlüftungsanschluss eines Lagertanks einer Betankungsanlage verbindbar ist, d.h. dazu eingerichtet ist, beim Befüllen der Tankzelle mit Treibstoff mit einem Be- bzw. Entlüftungsanschluss eines Lagertanks einer Betankungsanlage verbunden zu werden.

Beim Betanken eines mit dem erfindungsgemäßen Luftfahrzeugtanksystem ausgestatteten Luftfahrzeugs mittels einer erfindungsgemäßen Betankungsanlage wird der Treibstoffeinlassanschluss des Tanksystems über die Betankungsleitung der Betankungsanlage mit dem Treibstoffauslassanschluss des Lagertanks der Betankungsanlage verbunden. Über die Betankungsleitung wird Treibstoff aus dem Lagertank in die Tankzelle des Luftfahrzeugtanksystems geleitet. Vorzugsweise erfolgt das Befüllen der Tankzelle des Luftfahrzeugtanksystems mit Treibstoff aus dem Lagertank der Betankungsanlage durch Druckbetankung. Der mit der Be- bzw. Entlüftungsvorrichtung verbundene Abluftauslassanschluss des Luftfahrzeugtanksystems wird über die Abluftleitung der Betankungsanlage mit dem Be- bzw. Entlüftungsanschluss des Lagertanks der Betankungsanlage verbunden. Wenn der Abluftauslassanschluss des Luftfahrzeugtanksystems mit dem Be- bzw. Entlüftungsanschluss des Lagertanks verbunden ist, wird beim Befüllen der Tankzellen des Luftfahrzeugtanksystems mit Treibstoff Abluft aus der Tankzelle des Luftfahrzeugtanksystems in den Lagertank geleitet.

Die Emission von Abluft aus der Tankzelle des Tanksystem in die Umgebung wird dadurch unterbunden, dass das Sperrventil der Be- bzw. Entlüftungsvorrichtung in seine Schließstellung gesteuert wird. Wenn das Luftfahrzeugtanksystem mehrere Sperrventile umfasst, werden sämtliche Sperrventile in ihre Schließstellung gesteuert. Da die Abluftabfuhr aus der Tankzelle des Luftfahrzeugtanksystems in die Umgebung unterbunden ist, wird das gesamte Luftvolumen, das durch ein entsprechendes Treibstoffvolumen aus der Tankzelle des Tanksystems verdrängt wird, in den Lagertank der Betankungsanlage überführt. Da der Treibstoff der Tankzelle des Tanksystems bei einer Druckbetankung ohnehin mit einem gegenüber dem Umgebungsdruck erhöhten Druck zugeführt wird, ist für die Abluftabfuhr aus der Tankzelle keine zusätzliche Fördereinrichtung erforderlich. Vorzugsweise ist eine als Be- bzw. Entlüftungsleitung ausgebildete Be- bzw. Entlüftungsvorrichtung des erfindungsgemäßen Luftfahrzeugtanksystems jedoch als Druckleitung ausgebildet.

Die vorliegende Erfindung ermöglicht es, beim Betanken eines Luftfahrzeugs die Emission von treibstoffdampfhaltiger Abluft aus dem Tanksystem des Luftfahrzeugs in die Umgebung sicher zu unterbinden. Das erfindungsgemäße Luftfahrzeugtanksystem, die erfindungsgemäße Betankungsanlage sowie das erfindungsgemäße Verfahren zum Betanken eines Luftfahrzeugs sind daher besonders umweltfreundlich. Darüber hinaus ermöglicht die vorliegende Erfindung die Minimierung von aus der Emission treibstoffdampfhaltiger Abluft resultierenden Sicherheitsrisiken. Schließlich kann der beim Betanken des Luftfahrzeugs verdampfende Treibstoff in dem Lagertank der Betankungsanlage beim Vorliegen geeigneter Umgebungsbedingungen (Druck, Temperatur) kondensiert und somit rückgewonnen werden. Bei geschlossener Versorgungskette zwischen einem Tanklager am Flughafen, einem Tankfahrzeug und dem Luftfahrzeugtanksystem ist eine Rückgewinnung durch Kondensation nicht nötig, da die Luft im System gesättigt ist und im System verbleibt. Eine Treibstoffrückgewinnung ist insbesondere für leichtflüchtige Treibstoffe auch wirtschaftlich interessant. Die vorliegende Erfindung ist daher in besonders vorteilhafter Weise bei der Betankung eines Luftfahrzeugs mit alternativen Treibstoffen, wie z.B. Alkoholen oder Biotreibstoffen einsetzbar.

Ein weiterer Vorteil der vorliegenden Erfindung besteht darin, dass sie ohne großen Aufwand realisierbar ist. Das erfindungsgemäße Luftfahrzeugtanksystem zeichnet sich durch ein sehr geringes zusätzliches Gewicht sowie einen sehr geringen zusätzlichen Einbauraumbedarf aus. Beispielsweise kann bei der erfindungsgemäßen Betankungsanlage der ohnehin vorhandene Be- bzw. Entlüftungsanschluss der Betankungsanlage zur Verbindung der Abluftleitung mit dem Lagertank der Betankungsanlage genutzt werden.

Schließlich ist das erfindungsgemäße Luftfahrzeugtanksystem bei Bedarf auch ohne Abluftzuführung in einen Lagertank einer Betankungsanlage funktionsfähig. Ein mit dem erfindungsgemäßen Luftfahrzeugtanksystem ausgestattetes Flugzeug kann daher auch konventionell, d.h. unter Abfuhr der Abluft aus der Tankzelle des Tanksystems in die Umgebung betankt werden. Das Flugzeug unterliegt dann keinerlei Einschränkungen, wenn beispielsweise an einem Flughafen keine zum Zusammenwirken mit dem erfindungsgemäßen Tanksystem geeignete Betankungsanlage vorhanden ist. Darüber hinaus muss das Tanksystem nicht zwingend ausfallsicher ausgelegt sein.

Vorzugsweise umfasst das erfindungsgemäße Luftfahrzeugtanksystem eine Steuereinrichtung zur Steuerung des Sperrventils der Be- bzw. Entlüftungsvorrichtung des Tanksystems. Wenn das Tanksystem mehrere Sperrventile umfasst, steuert die Steuereinrichtung vorzugsweise alle Sperrventile des Tanksystems. Alternativ dazu kann jedoch auch jedes Sperrventil des Luftfahrzeugtanksystems mittels einer separaten Steuereinrichtung gesteuert werden. Die beispielsweise in Form einer elektronischen Steuereinrichtung ausgebildete Steuereinrichtung steuert das Sperrventil vorzugsweise anhand von Sensorsignalen, die anzeigen, ob der mit der Be- bzw. Entlüftungsvorrichtung des Luftfahrzeugtanksystems verbundene Abluftauslassanschluss mit dem Be- bzw. Entlüftungsanschluss des Lagertanks der Betankungsanlage verbunden ist. Die Steuereinrichtung steuert das Sperrventil nur dann in eine Schließstellung, wenn die Sensorsignale der Steuereinrichtung anzeigen, dass eine ordnungsgemäße Verbindung des Abluftauslassanschlusses des Tanksystems mit dem Be- bzw. Entlüftungsanschluss des Lagertanks der Betankungsanlage besteht. Ein unbeabsichtigtes Absperren der Be- bzw. Entlüftungsvorrichtung des Tanksystems, das eine unzureichende Be- bzw. Entlüftung der Tankzelle des Systems zur Folge haben könnte, wird dadurch sicher unterbunden.

Das Sperrventil der Be- bzw. Entlüftungsvorrichtung des erfindungsgemäßen Flugzeugtanksystems ist vorzugsweise als Ventil mit Über- und/oder Unterdrucksicherung ausgebildet. Beispielsweise kann das Sperrventil als Sicherheitsventil mit Über-und/oder Unterdrucksicherung ausgebildet sein. Alternativ dazu ist auch eine Konfiguration mit z.B. drei parallel geschalteten Ventilen, d.h. einem schaltbaren Sperrventil, einem Überdruckventil und einem Unterdruckventil denkbar. Bei einer derartigen Konfiguration wäre es ausreichend, nur das schaltbare Sperrventil mittels der elektronischen Steuereinrichtung zu steuern. Ein Sperrventil mit Über- und Unterdrucksicherung ermöglicht auch dann einen sicheren Betankungsvorgang, wenn starke Temperaturunterschiede zwischen der Tankzelle des Luftfahrzeugtanksystems und dem Lagertank der Betankungsanlage bestehen.

Der mit der Be- bzw. Entlüftungsvorrichtung des erfindungsgemäßen Luftfahrzeugtanksystems verbundene Abluftauslassanschluss ist vorzugsweise benachbart zu dem Treibstoffeinlassanschluss des Luftfahrzeugtanksystems angeordnet oder integriert mit dem Treibstoffeinlassanschluss des Luftfahrzeugtanksystems ausgebildet. In ähnlicher Weise ist der Be- bzw. Entlüftungsanschluss des Lagertanks der erfindungsgemäßen Betankungsanlage vorzugsweise benachbart zu dem Treibstoffauslassanschluss des Lagertanks angeordnet oder integriert mit dem Treibstoffauslassanschluss des Lagertanks ausgebildet. Bei einer derartigen Anordnung können die Betankungsleitung und die Abluftleitung der erfindungsgemäßen Betankungsanlage auf besonders einfache und rasche Art und Weise mit den entsprechenden Anschlüssen der Betankungsanlage und des Luftfahrzeugtanksystems verbunden werden.

Das Betanken eines mit dem erfindungsgemäßen Luftfahrzeugtanksystem ausgestatteten Luftfahrzeugs mittels einer erfindungsgemäßen Betankungsanlage ist besonders komfortabel, wenn der mit der Be- bzw. Entlüftungsvorrichtung des Luftfahrzeugtanksystems verbundene Abluftauslassanschluss und der Treibstoffeinlassanschluss des Luftfahrzeugtanksystems in Form einer Koaxialkupplung ausgebildet sind. Der Abluftauslassanschluss und der Treibstoffeinlassanschluss können dann mit einer die Treibstoffleitung und die Abluftleitung der Betankungsanlage bildenden Koaxialleitung verbunden werden. Um eine ordnungsgemäße Verbindung dieser Koaxialleitung mit dem Be- bzw. Entlüftungsanschluss sowie dem Treibstoffauslassanschluss des Lagertanks der Betankungsanlage zu gewährleisten, sind der Be- bzw. Entlüftungsanschluss und der Treibstoffauslassanschluss des Lagertanks dann vorzugsweise ebenfalls in Form einer Koaxialkupplung ausgebildet.

Ein bevorzugtes Ausführungsbeispiel der vorliegenden Erfindung wird nun anhand der beigefügten schematischen Figur näher erläutert, die ein Flugzeug mit einem Flugzeugtanksystem sowie eine Betankungsanlage zur Betankung des Flugzeugtanksystems zeigt.

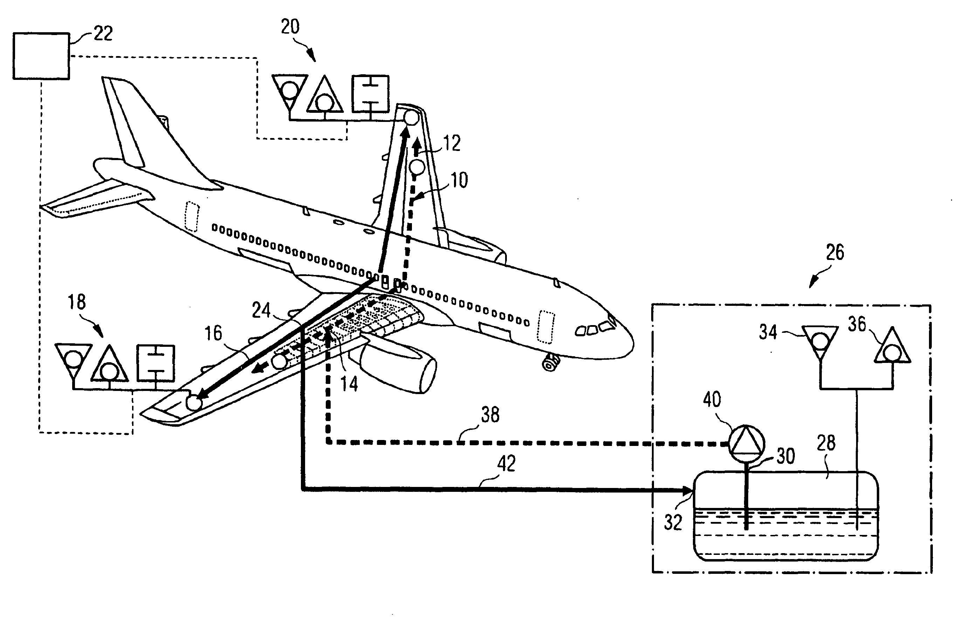

Ein in der Figur gezeigtes Flugzeug ist mit einem Flugzeugtanksystem 10 ausgestattet, das eine Mehrzahl von in der Figur nicht näher veranschaulichten Tankzellen umfasst. Die Tankzellen sind im Bereich der Flügel sowie eines Flügelmittelkastens des Flugzeugs angeordnet. Eine Treibstoffleitung 12 verbindet die Tankzellen des Flugzeugtanksystems 10 mit einem im Bereich des rechten Flügels des Flugzeugs angeordneten zentralen Treibstoffeinlassanschluss 14. Im Normalbetrieb des Flugzeugs ist der Treibstoffeinlassanschluss 14 verschlossen. Lediglich beim Betanken des Flugzeugs wird der Treibstoffeinlassanschluss 14 geöffnet, um die Zufuhr von Treibstoff in die Treibstoffleitung 12 und folglich die Tankzellen des Tanksystems 10 zu ermöglichen.

Um im Normalbetrieb des Flugzeugs eine ordnungsgemäße Be- bzw. Entlüftung der Tankzellen des Flugzeugtanksystems 10 zu gewährleisten, sind die Tankzellen des Tanksystems 10 mit einer Be- bzw. Entlüftungsleitung 16 verbunden. Die Be- bzw. Entlüftungsleitung 16 erstreckt sich, ähnlich wie die Treibstoffleitung 12, entlang der Flügel des Flugzeugs. An den Flügelenden ist jeweils ein NACA-Einlass vorgesehen, der die Be- bzw. Entlüftungsleitung 16 mit der Umgebung verbindet. Im Bereich der NACA-Lufteinlässe ist jeweils ein Sperrventil 18, 20 in der Be- bzw. Entlüftungsleitung 16 angeordnet.

Die Sperrventile 18, 20 sind jeweils als Ventile mit Über- und Unterdrucksicherung ausgebildet und geben in einer Offenstellung die NACA-Einlässe der Be- bzw. Entlüftungsleitung 16 frei. In einer Schließstellung versperren die Sperrventile 18, 20 dagegen die NACA-Einlässe der Be- bzw. Entlüftungsleitung 16. Wenn sich die Sperrventile 18, 20 in ihrer Schließstellung befinden, kann somit Umgebungsluft durch die Be- bzw. Entlüftungsleitung 16 in die Tankzellen des Tanksystems 10 strömen. In gleicher Weise ist eine Luftströmung aus den Tankzellen des Tanksystems 10 durch die Be- bzw. Entlüftungsleitung 16 in die Umgebung möglich. Die Sperrventile 18, 20 werden mittels einer elektronischen Steuereinrichtung 22 gesteuert.

Das Flugzeugtanksystem 10 umfasst ferner einen mit der Be- bzw. Entlüftungsleitung 16 verbundenen Abluftauslassanschluss 24. Ähnlich wie der Treibstoffeinlassanschluss 14 ist auch der Abluftauslassanschluss 24 verschließbar ausgebildet und wird nur beim Betanken des Flugzeugs geöffnet. Im geöffneten Zustand des Abluftauslassanschlusses 24 kann Luft durch die Be- bzw. Entlüftungsleitung 16 aus den Tankzellen des Tanksystems 10 über den Abluftauslassanschluss 24 abgeleitet werden.

Eine Betankungsanlage 26 zur Betankung des Luftfahrzeugtanksystems 10 umfasst einen Lagertank 28 zur Aufnahme von Treibstoff. Der Lagertank 28 weist einen Treibstoffauslassanschluss 30 sowie einen Be- bzw. Entlüftungsanschluss 32 auf. Sicherheitsventile 34, 36 sichern den Lagertank 28 gegen unerwünschten Überdruck oder Unterdruck.

Die entweder als mobile Anlage in Form eines Tankwagens oder in Form eines stationären Systems ausgebildete Betankungsanlage 26 umfasst ferner eine Betankungsleitung 38. Um Treibstoff aus dem Lagertank 28 in die Tankzellen des Flugzeugtanksystems 10 zu leiten, ist die Betankungsleitung 38 mit dem Treibstoffauslassanschluss 30 des Lagertanks 28 sowie dem Treibstoffeinlassanschluss 14 des Flugzeugtanksystems 10 verbindbar. Eine Fördereinrichtung 40 fördert den Treibstoff unter Druck durch die Betankungsleitung 38.

Schließlich umfasst die Betankungsanlage 26 eine Abluftleitung 42. Die Abluftleitung 42 ist mit dem Be- bzw. Entlüftungsanschluss 32 des Lagertanks 28 sowie dem Abluftauslassanschluss 24 des Luftfahrzeugtanksystems 10 verbindbar.

Zum Betanken des Flugzeugs wird zunächst der Treibstoffauslassanschluss 30 des Lagertanks 28 über die Betankungsleitung 38 mit dem Treibstoffeinlassanschluss 14 des Flugzeugtanksystems 10 verbunden. Anschließend wird der Be- bzw. Entlüftungsanschluss 32 des Lagertanks 28 über die Abluftleitung 42 mit dem Abluftauslassanschluss 24 des Flugzeugtanksystems 10 verbunden. Da der Be- bzw. Entlüftungsanschluss 32 und der Treibstoffauslassanschluss 30 des Lagertanks 28 ebenso wie der Abluftauslassanschluss 24 und der Treibstoffeinlassanschluss 14 des Tanksystems 10 benachbart zueinander angeordnet sind, sind die Abluftleitung 42 und die Betankungsleitung 38 der Betankungsanlage 26 auf verhältnismäßig rasche und einfache Art und Weise mit den entsprechenden Anschlüssen des Flugzeugtanksystems 10 und des Lagertanks 28 verbindbar.

Wenn die Abluftleitung 32 der Betankungsanlage 26 ordnungsgemäß mit dem Abluftauslassanschluss 24 des Flugzeugtanksystems 10 verbunden ist, gibt ein in der Figur nicht gezeigter Sensor ein entsprechendes Signal an die elektronische Steuereinrichtung 22 aus. Die elektronische Steuereinrichtung 22 steuert daraufhin die Sperrventile 18, 20 in ihre Schließstellung. Dadurch wird die Verbindung zwischen den Tankzellen des Tanksystems 10 und der Umgebung unterbrochen. Die Abfuhr von Abluft aus den Tankzellen des Tanksystems 10 ist somit nicht länger möglich.

Während der Druckbetankung der Tankzellen des Tanksystems 10 wird ein Luftvolumen aus den Tankzellen des Tanksystems 10 verdrängt, das dem aus dem Lagertank 28 in die Tankzellen zugeführten Treibstoffvolumen entspricht. Die aus den Tankzellen verdrängte Luft wird über die als Druckleitung ausgebildete Be- bzw. Entlüftungsleitung 16 des Tanksystems 10 zu dem mit der Be- bzw. Entlüftungsleitung 16 verbundenen Abluftauslassanschluss 24 geleitet und von dort über die Abluftleitung 42 in den Lagertank 28 der Betankungsanlage 26 abgeführt. Mit der Abluft wird auch in der Abluft enthaltener Treibstoffdampf in den Lagertank 28 der Betankungsanlage 26 abgeführt und kann dort unter geeigneten Umgebungsbedingungen durch Kondensation rückgewonnen werden.

Nach Beendigung des Tankvorgangs werden die Betankungsleitung 38 und die Abluftleitung 42 der Betankungsanlage 26 von den entsprechenden Anschlüssen des Flugzeugtanksystems 10 gelöst. Die elektronische Steuereinrichtung 22 empfängt daraufhin Signale, die anzeigen, dass der Abluftauslassanschluss 24 des Flugzeugtanksystems 10 nicht länger über die Abluftleitung 42 mit dem Be- bzw. Entlüftungsanschluss 32 des Lagertanks 28 verbunden ist. Daraufhin steuert die elektronische Steuereinrichtung 22 die Sperrventile 18, 20 in ihre Offenstellung zurück, in der sie die Tankzellen des Tanksystems 10 über die Be- bzw. Entlüftungsleitung 16 mit der Umgebung verbinden.

Grundsätzlich können die Sperrventile 18, 20 auch während des Betankungsvorgangs in ihrer Offenstellung verbleiben. Die beim Befüllen der Tankzellen des Flugzeugtanksystems 10 aus den Tankzellen verdrängte treibstoffdampfhaltige Abluft wird dann in konventioneller Art und Weise über die Be- bzw. Entlüftungsleitung 16 und die NACA-Einlässe in die Umgebung abgeleitet. Das Flugzeugtanksystem 10 ist folglich auch dann funktionsfähig, wenn keine Betankungsanlage zur Verfügung steht, die die Ableitung der aus den Tankzellen des Tanksystems 10 verdrängten Abluft über den Abluftauslassanschluss 24 des Flugzeugtanksystems 10 ermöglicht.

Da die Sperrventile 18, 20 jeweils als Sicherheitsventile mit Über- und Unterdrucksicherung ausgebildet sind, ist darüber hinaus auch bei einem Versagen des Abluftauslassanschlusses 24, der Abluftleitung 42 oder des Be- bzw. Entlüftungsanschlusses 32 des Lagertanks 28 eine ordnungsgemäße Entlüftung der Tankzellen des Flugzeugtanksystems 10 während eines Betankungsvorgangs gewährleistet. Ferner verhindern die als Sicherheitsventile ausgebildeten Sperrventile 18, 20, dass sich in der Be- bzw. Entlüftungsleitung 16 oder den Tankzellen des Tanksystems 10 ein unerwünschter Unterdruck aufbaut.

## Patentansprüche

1. Luftfahrzeugtanksystem (10) mit:
- einer Tankzelle zur Aufnahme von Treibstoff,
- einer Treibstoffleitung (12), die die Tankzelle mit einem Treibstoffeinlassanschluss (14) verbindet, und
- einer Be- bzw. Entlüftungsvorrichtung (16), die die Tankzelle zur Be- und Entlüftung der Tankzelle mit der Umgebung verbindet,
wobei die Be- bzw. Entlüftungsvorrichtung (16) ein Sperrventil (18, 20) umfasst, das dazu eingerichtet ist, in einer Offenstellung eine Verbindung zwischen der Tankzelle und der Umgebung freizugeben und in einer Schließstellung die Verbindung zwischen der Tankzelle und der Umgebung zu unterbrechen,
**dadurch gekennzeichnet, dass** das Luftfahrzeugtanksystem (10) ferner eine Steuereinrichtung (22) umfasst, die dazu eingerichtet ist, das Sperrventil (18, 20) der Be- bzw. Entlüftungsvorrichtung (16) beim Befüllen der Tankzelle mit Treibstoff in seine Schließstellung zu steuern, und dass mit der Be- bzw. Entlüftungsvorrichtung (16) ein Abluftauslassanschluss (24) verbunden ist, der beim Befüllen der Tankzelle mit Treibstoff mit einem Be- bzw. Entlüftungsanschluss (32) eines Lagertanks (28) einer Betankungsanlage (26) verbindbar ist, um beim Befüllen der Tankzelle Abluft aus der Tankzelle in den Lagertank (28) der Betankungsanlage (26) zu leiten.

2. Luftfahrzeugtanksystem nach Anspruch 1,
**dadurch gekennzeichnet, dass** die Steuereinrichtung (22) dazu eingerichtet ist, das Sperrventil (18, 20) der Be- bzw. Entlüftungsvorrichtung (16) anhand von Sensorsignalen zu steuern, die anzeigen, ob der mit der Be- bzw. Entlüftungsvorrichtung (16) des Luftfahrzeugtanksystems (10) verbundene Abluftauslassanschluss (24) mit dem Be- bzw. Entlüftungsanschluss (32) des Lagertanks (28) der Betankungsanlage (26) verbunden ist.

3. Luftfahrzeugtanksystem nach Anspruch 1 oder 2,
**dadurch gekennzeichnet, dass** das Sperrventil (18, 20) der Be- bzw. Entlüftungsvorrichtung (16) als Ventil mit Über- und/oder Unterdrucksicherung ausgebildet ist.

4. Luftfahrzeugtanksystem nach einem der Ansprüche 1 bis 3,
**dadurch gekennzeichnet, dass** der mit der Be- bzw. Entlüftungsvorrichtung (16) des Luftfahrzeugtainksystems (10) verbundene Abluftauslassanschluss (24) benachbart zu dem Treibstoffeinlassanschluss (14) des Luftfahrzeugtanksystems (10) angeordnet oder integriert mit dem Treibstoffeinlassanschluss (14) des Luftfahrzeugtanksystems (10) ausgebildet ist.

5. Luftfahrzeugtanksystem nach Anspruch 4,
**dadurch gekennzeichnet, dass** der mit der Be- bzw. Entlüftungsvorrichtung (16) des Luftfahrzeugtanksystems (10) verbundene Abluftauslassanschluss (24) und der Treibstoffeinlassanschluss (14) des Luftfahrzeugtanksystems (10) in Form einer Koaxialkupplung ausgebildet sind.

6. Verfahren zum Betanken eines Luftfahrzeugs mit den Schritten:
- Verbinden eines Treibstoffauslassanschlusses (30) eines Lagertanks (28) einer Betankungsanlage (26) mit einem Treibstoffeinlassanschluss (14) eines Luftfahrzeugstanksystems (10), und
- Leiten von Treibstoff aus dem Lagertank (28) in eine Tankzelle des Luftfahrzeugtanksystems (10),
**dadurch gekennzeichnet, dass** ein Sperrventil (18, 20) einer Be- bzw. Entlüftungsvorrichtung (16) des Luftfahrzeugtanksystems (10), das dazu eingerichtet ist, in einer
Offenstellung eine Verbindung zwischen der Tankzelle des Luftfahrzeugtanksystems (10) und der Umgebung freizugeben und in einer Schließstellung die Verbindung zwischen der Tankzelle des Luftfahrzeugtanksystems (10) und der Umgebung zu unterbrechen, in seine Schließstellung gesteuert wird und dass ein Be- bzw. Entlüftungsanschluss (32) des Lagertanks (28) der Betankungsanlage (26) mit einem mit der Be- bzw. Entlüftungsvorrichtung (16) des Luftfahrzeugtanksystems (10) verbundenen Abluftauslassanschluss (24) verbunden wird, so dass beim Befüllen der Tankzelle des Luftfahrzeugtanksystems (10) mit Treibstoff Abluft aus der Tankzelle des Luftfahrzeugtanksystems (10) in den Lagertank (28) der Betankungsanlage (26) geleitet wird.

7. Verfahren nach Anspruch 6,
**dadurch gekennzeichnet, dass** das Sperrventil (18, 20) der Be- bzw. Entlüftungsvorrichtung (16) des Luftfahrzeugtanksystems (10) mittels einer Steuereinrichtung (22) anhand von Sensorsignalen gesteuert wird, die anzeigen, ob der mit der Be- bzw. Entlüftungsvorrichtung (16) des Luftfahrzeugtanksystems (10) verbundene Abluftauslassanschluss (24) mit dem Be- bzw. Entlüftungsanschluss (32) des Lagertanks (28) der Betankungsanlage (26) verbunden ist.

## Claims

1. Aircraft tank system (10) comprising:
- a tank cell for receiving fuel,
- a fuel line (12) that connects the tank cell to a fuel inlet connection (14), and
- an aeration- and/or deaeration device (16) that for aeration and/or deaeration of the tank cell connects the tank cell to the environment,
wherein the aeration- and/or deaeration device (16) comprises a shut-off valve (18, 20) that is adapted in an open position to open a connection between the tank cell and the environment and in a closed position to interrupt the connection between the tank cell and the environment,
**characterized in that** the aircraft tank system (10) further comprises a control device (22) that is adapted during filling of the tank cell with fuel to control the shut-off valve (18, 20) of the aeration- and/or deaeration device (16) into its closed position, and that there is connected to the aeration- and/or deaeration device (16) an exhaust air outlet connection (24), which during filling of the tank cell with fuel is connectable to an aeration- and/or deaeration connection (32) of a storage tank (28) of a refuelling unit (26) in order during filling of the tank cell to convey exhaust air from the tank cell into the storage tank (28) of the refuelling unit (26).

2. Aircraft tank system according to claim 1,
**characterized in that** the control device (22) is adapted to control the shut-off valve (18, 20) of the aeration- and/or deaeration device (16) on the basis of sensor signals that indicate whether the exhaust air outlet connection (24) connected to the aeration- and/or deaeration device (16) of the aircraft tank system (10) is connected to the aeration- and/or deaeration connection (32) of the storage tank (28) of the refuelling unit (26).

3. Aircraft tank system according to claim 1 or 2,
**characterized in that** the shut-off valve (18, 20) of the aeration- and/or deaeration device (16) is configured as a pressure- and/or vacuum relief valve.

4. Aircraft tank system according to one of claims 1 to 3,
**characterized in that** the exhaust air outlet connection (24) connected to the aeration- and/or deaeration device (16) of the aircraft tank system (10) is disposed adjacent to the fuel inlet connection (14) of the aircraft tank system (10) or is formed integral with the fuel inlet connection (14) of the aircraft tank system (10).

5. Aircraft tank system according to claim 4,
**characterized in that** the exhaust air outlet connection (24), which is connected to the aeration- and/or deaeration device (16) of the aircraft tank system (10), and the fuel inlet connection (14) of the aircraft tank system (10) are configured in the form of a coaxial coupling.

6. Method of refuelling an aircraft comprising the steps:
- connecting a fuel outlet connection (30) of a storage tank (28) of a refuelling unit (26) to a fuel inlet connection (14) of an aircraft tank system (10), and
- conveying fuel from the storage tank (28) into a tank cell of the aircraft tank system (10),
**characterized in that** a shut-off valve (18, 20) of an aeration- and/or deaeration device (16) of the aircraft tank system (10) that is adapted in an open position to open a connection between the tank cell of the aircraft tank system (10) and the environment and in a closed position to interrupt the connection between the tank cell of the aircraft tank system (10) and the environment is controlled into its closed position and that an aeration- and/or deaeration connection (32) of the storage tank (28) of the refuelling unit (26) is connected to an exhaust air outlet connection (24) connected to the aeration- and/or deaeration device (16) of the aircraft tank system (10) so that during filling of the tank cell of the aircraft tank system (10) with fuel exhaust air is conveyed out of the tank cell of the aircraft tank system (10) into the storage tank (28) of the refuelling unit (26).

7. Method according to claim 6,
**characterized in that** the shut-off valve (18, 20) of the aeration- and/or deaeration device (16) of the aircraft tank system (10) is controlled by means of a control device (22) on the basis of sensor signals that indicate whether the exhaust air outlet connection (24) connected to the aeration- and/or deaeration device (16) of the aircraft tank system (10) is connected to the aeration- and/or deaeration connection (32) of the storage tank (28) of the refuelling unit (26).

## Revendications

1. Système de réservoir d'aéronef (10), comprenant :
- un compartiment réservoir destiné à contenir du carburant,
- une conduite de carburant (12) qui relie le compartiment réservoir à un raccordement d'entrée de carburant (14) et
- un dispositif d'aération ou de ventilation (16) qui relie le compartiment réservoir à l'environnement pour aérer ou ventiler le compartiment réservoir,
le dispositif d'aération ou de ventilation (16) comportant un clapet de fermeture (18, 20) conçu pour libérer, en position ouverte, une liaison entre le compartiment réservoir et l'environnement, et pour interrompre, en position fermée, ladite liaison entre le compartiment réservoir et l'environnement,
**caractérisé en ce que** le système de réservoir d'aéronef (10) comprend de plus un dispositif de commande (22) conçu pour amener dans sa position fermée le clapet de fermeture (18, 20) du dispositif d'aération ou de ventilation (16) lors du remplissage du compartiment réservoir avec du carburant, et **en ce qu'**un raccordement d'évacuation d'air d'échappement (24), qui peut être relié à un raccordement d'aération ou de ventilation (32) d'un réservoir de stockage (28) d'une installation de ravitaillement en carburant (26), est relié au dispositif d'aération ou de ventilation (16) pour acheminer l'air d'échappement vers le réservoir de stockage (28) d'une installation de ravitaillement (26), lors du remplissage du compartiment réservoir avec du carburant.

2. Système de réservoir d'aéronef selon la revendication 1,
**caractérisé en ce que** le dispositif de commande (22) est conçu pour commander le clapet de fermeture (18, 20) du dispositif d'aération ou de ventilation (16) à l'aide de signaux de détection qui indiquent si le raccordement d'évacuation d'air d'échappement (24) relié au dispositif d'aération ou de ventilation (16) du système de réservoir d'aéronef (10) est relié au raccordement d'aération ou de ventilation (32) du réservoir de stockage (28) de l'installation de ravitaillement en carburant (26).

3. Système de réservoir d'aéronef selon la revendication 1 ou 2,
**caractérisé en ce que** le clapet de fermeture (18, 20) du dispositif d'aération ou de ventilation (16) est réalisé sous forme de clapet muni d'une protection en cas de sous-pression ou de surpression.

4. Système de réservoir d'aéronef selon l'une des revendications 1 à 3, **caractérisé en ce que** le raccordement d'évacuation d'air d'échappement (24) relié au dispositif d'aération ou de ventilation (16) du système de réservoir d'aéronef (10) est placé dans le voisinage du raccordement d'entrée de carburant (14) du système de réservoir d'aéronef (10) ou est réalisé intégré avec le raccordement d'entrée de carburant (14) du système de réservoir d'aéronef (10).

5. Système de réservoir d'aéronef selon la revendication 4,
**caractérisé en ce que** le raccordement d'évacuation d'air d'échappement (24) relié au dispositif d'aération ou de ventilation (16) du système de réservoir d'aéronef (10) et le raccordement d'entrée de carburant (14) du système de réservoir d'aéronef (10) sont réalisés sous la forme d'un accouplement coaxial.

6. Technique pour ravitailler un aéronef en carburant, comprenant les étapes suivantes :
- établir la liaison entre un raccordement de sortie de carburant (30) d'un réservoir de stockage (28) d'une installation de ravitaillement (26) et un raccordement d'entrée de carburant (14) du système de réservoir d'aéronef (10), et
- alimenter en carburant un compartiment réservoir du système de réservoir d'aéronef (10) depuis le réservoir de stockage (28),
**caractérisée en ce qu'**un clapet de fermeture (18, 20) du dispositif d'aération ou de ventilation (16) du système de réservoir d'aéronef (10), qui est conçu pour libérer, en position ouverte, une liaison entre le compartiment réservoir du système de réservoir d'aéronef (10) et l'environnement, et pour interrompre, en position fermée, ladite liaison entre le compartiment réservoir du système de réservoir d'aéronef (10) et l'environnement, est amené dans sa position fermée et **en ce qu'**un raccordement d'aération ou de ventilation (32) du réservoir de stockage (28) de l'installation de ravitaillement en carburant (26) est relié à un raccordement d'évacuation d'air d'échappement (24) relié à un raccordement d'aération ou de ventilation (16) du système de réservoir d'aéronef (10) de manière à faire s'évacuer l'air d'échappement du compartiment réservoir du système de réservoir d'aéronef (10) pour l'acheminer vers le réservoir de stockage (28) de l'installation de ravitaillement (26), lors du remplissage du compartiment réservoir avec du carburant.

7. Technique pour ravitailler un aéronef en carburant selon la revendication 6, **caractérisée en ce que** le clapet de fermeture (18, 20) du dispositif d'aération ou de ventilation (16) du système de réservoir d'aéronef (10) est commandé à l'aide d'un dispositif de commande (22) par l'intermédiaire de signaux de détection qui indiquent si le raccordement d'évacuation d'air d'échappement (24) relié au dispositif d'aération ou de ventilation (16) du système de réservoir d'aéronef (10) est relié au raccordement d'aération ou de ventilation (32) du réservoir de stockage (28) de l'installation de ravitaillement en carburant (26).
